# EUROPEAN PATENT APPLICATION

(11) **EP 4 668 520 A1**
(43) Date of publication of application: **24.12.2025**
(21) Application number: 25183946.0
(22) Date of filing: 19.06.2025
(51) Int. Cl.: H02J 1/10, H02J 1/14, H02J 7/34, H02J 13/00

(54) **MODULAR ENERGY MANAGEMENT SYSTEM**

(30) Priority: 19.06.2024 EP 24183126
(71) Applicant: Eorta NV, 9940 Evergem (BE)
(72) Inventor: De Clercq, John, 9340 Lede (BE); Romeyns, Dirk, 9630 Zwalm (BE)
(74) Representative: De Clercq & Partners

(57) **Abstract**

The present invention relates to the field of energy management systems, specifically to modular equipment designed for integrating and controlling various electrical energy sources and loads, including grid power, batteries, photovoltaic (PV) systems, wind turbines, fuel cells, combined heat and power (CHP) units, heat pumps, electric vehicles, hydrogen systems, and generators. The invention focuses on optimizing the flow of electrical energy between the connected electrical energy sources and loads, enhancing system scalability, flexibility, and efficiency through a coordinated modular approach.

## Description

### FIELD OF THE INVENTION

The present invention relates to the field of electrical energy management systems, specifically to modular equipment designed for integrating and controlling various electrical energy sources and loads. The invention focuses on managing the distribution and control of electrical energy between the connected electrical energy sources and loads interconnected via a direct current power distribution network, enhancing system scalability, flexibility, and efficiency through a coordinated modular approach.

### BACKGROUND

The current state of the art in electrical energy management systems encompasses a variety of technologies designed to harness, convert, and utilize electrical energy from multiple sources, including grid power, batteries, photovoltaic (PV) systems, wind turbines, fuel cells, combined heat and power (CHP) units, heat pumps, electric vehicles, hydrogen systems, and various generators. These systems typically involve complex configurations where each energy source and load are managed through dedicated control units and converters. The primary objective is to optimize energy flow, ensuring efficient utilization and minimizing reliance on non-renewable sources. Strategies like 'auto consumption' have been developed to prioritize the use of local renewable energy over grid energy, thereby reducing costs and environmental impact.

However, the existing solutions present various disadvantages. One of the primary challenges is the difficulty in integrating and managing multiple energy sources and loads in a cohesive and scalable manner. Each module in the system, equipped with its power converter, requires fast and precise control loops to manage energy flows effectively. This often leads to complex and cumbersome control architectures that are hard to maintain and expand. Additionally, the synchronization of energy flow across multiple modules and locations poses a considerable challenge, often resulting in inefficiencies and suboptimal performance.

Moreover, current systems lack the flexibility to easily adapt to changing energy needs or to integrate new energy sources and loads without substantial reconfiguration and technical intervention. The rigid control systems in place do not allow for dynamic adjustments based on real-time energy availability and demand. This inflexibility can lead to energy wastage, increased operational costs, and a lower overall efficiency of the electrical energy management system.

For example, EP 4175106 A1 describes an electric power system including a plurality of electric power elements, each including an electric power converter electrically connected to a commercial power system of the alternating current type and including a device electrically connected to the electric power converter. Each electric power converter includes a control unit configured to perform primary control based on a reference function having the drooping characteristic for generating the target value when local-control of the corresponding device is implemented according to the voltage measured by the electric power converter.

In another example, WO 2013039753 A1 describes an energy management and conversion system for charging an electric vehicle, plural energy sources are coupled to a DC bus through respective converters, and respective voltage set points are provided for the respective converters, each converter controlling flow of energy between the DC bus and the respective energy source by determining whether the voltage of the DC bus is less than the respective voltage set point.

There is a need for a solution to address the limitations of the current state of the art by improve the integration of various energy sources and loads, enabling more scalable and flexible electrical energy management. Furthermore, this solution should advantageously enhance response speed, allowing for real-time adjustments to energy flow based on operating conditions, thereby enhancing the overall responsiveness and performance of the system.

### SUMMARY OF THE INVENTION

It is an objective of the present invention to address the limitations of the current state of the art by providing a modular electrical energy management system that includes a master module communicatively connected to a plurality of local modules. Each local module comprises an interface for connecting various energy source and/or load, thereby enabling enable electrical energy flow across a shared direct current (DC) power distribution network.

Each local module in such a shared electrical energy management system requires fast current, voltage, and/or power control to deal with varying energy demands of the various sources and loads. To avoid potential delays caused by the central module managing each local module individually, the modules are configured to locally control their power transfer by monitoring one or more electrical energy parameters of the power distribution network, such as the voltage. The master module holds the system configuration and instructs the local modules on how to respond to the monitored parameters, which advantageously does not require high-speed communication. This configuration allows the operation of any number of local modules to be controlled by a single master module.

Another advantage of the present invention is its capacity to increase the response speed of the management system. The modular management system is configured so that the flow of electrical power is decentralized and adjustable by each local module individually. This decentralized approach allows each local module to rapidly respond to changes in energy supply and demand without needing instructions from the central controller. Additionally, by allowing local modules to independently manage their energy flows, the system can continue to operate effectively even if the master module encounters issues, thereby enhancing overall reliability and resilience.

For example, the system can enable real-time adjustments to energy management strategies based on current conditions, such as fluctuations in energy production from renewable sources, changes in load demands, or variations in grid pricing. This capability ensures that the system can swiftly and efficiently balance energy distribution, optimizing performance and reducing latency compared to existing systems that rely on centralized control. This modular and responsive design is particularly advantageous in environments where energy conditions can change rapidly, such as in residential settings with variable solar power input or in industrial applications with fluctuating energy demands.

Yet another advantage of the present invention is its ability to integrate various energy sources and loads in a modular manner, allowing for more flexible energy management customizable to the user's specific needs. This modular design facilitates the integration of additional local modules into the management system, enabling it to scale up to meet increased energy demands or to incorporate new energy sources and/or locally connect to various energy sources and loads set that are located at different locations without requiring distinct setups at each location through separate control units.

This configuration addresses the rigidity and complexity of existing systems, reducing the need for extensive reconfiguration and technical intervention when making modifications and enhancing the system's applicability in diverse settings, from residential to industrial environments, without increasing the complexity and associated operational costs commonly seen with such setups. Moreover, the modular and scalable nature of the system simplifies maintenance and expansion, making it more cost-effective and adaptable to future energy needs or provisions.

The below summary is provided to introduce a selection of key embodiments of the invention in a simplified form. These embodiments are described in further detail in the detailed description of the disclosure below. This summary is not intended to identify key features or essential features of the claimed subject matter, nor is it intended to be used to limit the scope of the claimed subject matter.

An aspect of the present invention relates to a modular electrical energy management system comprising:
- a master module communicatively connected to a plurality of local modules;
   - wherein at least one of the plurality of local modules comprises and/or is connected to one or more electrical energy sources;
   - wherein at least one of the plurality of local modules comprises and/or is connected to one or more loads;
- a power distribution network configured for the transfer of electrical energy as direct current between the plurality of local modules;
   - wherein each local module of the plurality of local modules configured to locally adjust the flow of electrical energy to or from the power distribution network;
- wherein the master module is configured to:
   - receive system configuration data including information about the plurality of local modules, energy sources, and energy loads;
   - determine, from the system configuration data, a global profile defining an energy management strategy and one or more global control conditions including system-wide constraints and/or control objectives applicable across the plurality of local modules;
   - determine, from the global profile, a set of performance profiles specific to a respective local module, wherein each performance profile includes one or more operating parameters defining how the local module is to operate in response to the flow of direct current across the power distribution network; and,
   - transmit the set of performance profiles and the one or more global control conditions to the corresponding local modules;
- wherein each local module of the plurality of local modules is configured to:
   - receive, from the master module, the corresponding performance profile of the set of performance profiles and the global control conditions;
   - define, based on its comprised and/or connected electrical energy sources or loads, one or more local operating conditions including local constraints and/or device-specific operational preferences;
   - continuously monitor the flow of direct current across the power distribution network, and control the flow of electrical energy to or from the power distribution network in accordance with the operating parameters defined in its performance profile; and,
   - continuously monitor its local operating conditions and the received global control conditions, and modify the flow of electrical energy based on the local operating conditions and/or global control conditions, thereby overriding the performance profile;
   - wherein the plurality of local modules is further configured to dynamically adjust their respective flows of electrical energy in response to any modification by one or more local modules, thereby maintaining a balanced flow of direct current across the power distribution network.

Another aspect of the invention relates to a modular electrical energy management system comprising
- a master module communicatively connected to a plurality of local modules;
- wherein at least one of the local modules includes and/or is connected to one or more electrical energy sources;
- wherein at least one of the local modules includes and/or is connected to one or more loads;
- wherein the local modules are electrically connected through a power distribution network configured for transfer of electrical energy as direct current between the local modules;
- wherein the local modules are configured for locally adjusting the flow of electrical energy to or from the power distribution network;
- wherein the master module (105) is configured to:
   - receive system configuration data including information about the plurality of local modules, energy sources, and energy loads;
   - determine, from the system configuration data, a global profile defining an energy management strategy;
   - determine, from the global profile, a set of performance profiles specific for each local module, each performance profile including one or more operating parameters defining an operation of the local module responsive to the flow of direct current across the power distribution network;
   - transmit the set of performance profiles to the corresponding local modules;
- wherein each local module is configured to:
   - receive, from the master module, the corresponding performance profile of the set of performance profiles;
   - continuously monitor the flow of direct current across the power distribution network;
   - adjust the flow of electrical energy to or from the power distribution network in accordance with the operating parameters included in the corresponding performance profile.

Another aspect of the present invention relates to a method for modularly managing electrical energy, preferably through a modular energy management system comprising multiple energy sources and loads interconnected via a DC power distribution network, the method comprising the steps of:
- providing a modular energy management system (100) comprising a master module (105) communicatively connected to a plurality of local modules (102), wherein at least one of the local modules comprises and/or is connected to one or more electrical energy sources, wherein at least one of the local modules comprises and/or is connected to one or more loads, and a power distribution network (401) electrically connecting the plurality of local modules for transfer of electrical energy as direct current;
- receiving, by the master module, system configuration data including information about the plurality of local modules, energy sources, and energy loads;
- determining, by the master module from the system configuration data, a global profile defining an energy management strategy;
- determining, by the master module from the global profile, a set of performance profiles specific for each local module, each performance profile including one or more operating parameters defining an operation of the local module responsive to the flow of direct current across the power distribution network;
- transmitting, by the master module, the set of performance profiles to the corresponding local modules;
- receiving, by each local module, the corresponding performance profile of the set of performance profiles from the master module;
- continuously monitoring, by each local module, the flow of direct current across the power distribution network;
- adjusting, by each local module, the flow of electrical energy to or from the power distribution network responsive to the flow of direct current across the power distribution network in accordance with the operating parameters included in the corresponding performance profile.

Another aspect of the present invention relates to a method for modularly managing electrical energy, preferably through a modular energy management system comprising multiple energy sources and loads interconnected via a DC power distribution network, the method comprising the steps of:
the method comprising the steps of:
- providing a modular electrical energy management system comprising a master module communicatively connected to a plurality of local modules, wherein at least one of the plurality of local modules comprises and/or is connected to one or more electrical energy sources, wherein at least one of the plurality of local modules comprises and/or is connected to one or more loads, and a power distribution network electrically connecting the plurality of local modules for the transfer of electrical energy as direct current;
- receiving, by the master module, system configuration data including information about the plurality of local modules, energy sources, and energy loads;
- determining, by the master module, from the system configuration data: a global profile defining an energy management strategy, and one or more global control conditions defining system-wide constraints and/or control objectives applicable across the plurality of local modules;
- determining, by the master module, from the global profile, a set of performance profiles specific to a respective local module, wherein each performance profile includes one or more operating parameters defining how the corresponding local module is to operate in response to the flow of direct current across the power distribution network;
- transmitting, by the master module, the set of performance profiles and the one or more global control conditions to the corresponding local modules;
- receiving, by each local module, the corresponding performance profile of the set of performance profiles from the master module;
- defining, by each local module of the plurality of modules, based on its comprised and/or connected electrical energy sources or loads, one or more local operating conditions including local constraints and/or device-specific operational preferences;
- continuously monitoring, by each local module, the flow of direct current across the power distribution network, and, controlling the flow of electrical energy to or from the power distribution network in accordance with the operating parameters included in the corresponding performance profile;
- continuously monitoring, by each local module, its local operating conditions and the received global control conditions, and modifying the flow of electrical energy based on the local operating conditions and/or global control conditions, thereby overriding the performance profile;
- dynamically adjusting, by the plurality of local modules, their respective flows of electrical energy in response to any modification by one or more local modules, thereby maintaining a balanced flow of direct current across the power distribution network.

In some embodiments, each local module of the plurality of local modules is configured to measure a voltage of the direct current flowing across the power distribution network and adjust the flow of electrical energy to or from the power distribution network responsive to the measured voltage.

In some embodiments, each local module of the plurality of local modules comprises a voltage sensor configured for measuring the voltage of the direct current flowing across the power distribution network. In some embodiments, the voltage sensor includes a voltage divider circuit, an Analog-to-Digital Converter (ADC), an isolated voltage sensor, a voltage sensor module, and/or a differential measurement device.

In some embodiments, each local module is configured to dynamically adjust its flow of electrical energy based on continuous monitoring of the voltage of the power distribution network, such that, in response to a modification or override by one or more local modules, the remaining local modules autonomously increase or decrease their respective power injection or absorption in accordance with their performance profiles, thereby maintaining a balanced flow of direct current across the power distribution network without requiring coordination from the master module.

In some embodiments, the one or more global control conditions comprise at least one of: a voltage limit on the utility grid, a frequency deviation on the utility grid, a demand-response signal, a feed-in limitation imposed by a grid operator, and/or a time-of-use tariff.

In some embodiments, the one or more local operating conditions comprise at least one of: a state of charge of a connected battery, a temperature of a connected energy source or load, a fault condition detected by the local module, and/or a current or voltage limit of a connected device.

In some embodiments, each local module is further configured to transmit a notification to the master module upon initiating a modification or override of the performance profile based on the local operating conditions and/or global control conditions.

In some embodiments, each local module is configured to resume operation in accordance with its performance profile after the local operating conditions and/or global control conditions return to acceptable levels.

In some embodiments, at least one local module comprises a connection interface configured for establishing an adjustable electrical connection with the source and/or the load.

In some embodiments, at least one local module comprises a power converter unit configured for converting the power input of the connected energy loads and/or the power output of the connected energy sources to direct current into the power distribution network.

In some embodiments, the power converter unit includes a DC-DC converter, AC-DC converter, and/or DC-AC inverter.

In some embodiments, the system further comprises a communication interface comprising communicative pathways configured for data exchange between the master module and the plurality of local modules.

In some embodiments, the communication interface between the master module and the plurality of local modules is a low-speed communication interface configured to operate at data transfer rates sufficient for transmitting the performance profiles data, without requiring high-speed data transmission capabilities.

In some embodiments, the low-speed communication interface operates at data transfer rates ranging from bits per second (bps) to at most kilobits per second (kbps).

In some embodiments, the electrical energy source comprises one or more photovoltaic systems, wind turbines, fuel cells, generators, grid connections, and/or combined heat and power units.

In some embodiments, the load comprises one or more residential appliances, commercial appliances, industrial appliances, electric vehicles, heating and cooling systems, and/or lighting systems.

In some embodiments, the system further comprises a power supply network configured to supply electrical power for operating the master module and the plurality of local modules.

### DESCRIPTION OF THE FIGURES

The following description of the figures relate to specific embodiments of the disclosure which are merely exemplary in nature and not intended to limit the present teachings, their application or uses.
**Figure 1** shows a block chart illustrating a modular electrical energy management system 100 in accordance with aspects of the present invention.
**Figure 2** shows a block chart illustrating a modular electrical energy management network 200 comprising a plurality of modular electrical energy management systems in accordance with aspects of the present invention.
**Figure 3** shows an exemplary modular electrical energy management system 300 configured for residential application in accordance with aspects of the present invention.
**Figure 4** shows a detailed view of a power distribution network of a modular electrical energy management 400 system in accordance with aspects of the present invention.
**Figure 5** shows the operational performance of the local modules in an exemplary electrical energy management system configured for 'auto consumption' in accordance with aspects of the present invention.
**Figure 6** shows the operational performance of the local modules in an exemplary electrical energy management system configured for 'battery charging' in accordance with aspects of the present invention.
**Figure 7** shows the operational performance of the local modules in an exemplary electrical energy management system configured for 'battery discharging' in accordance with aspects of the present invention.

### DETAILED DESCRIPTION

Specific embodiments in accordance with various aspects of the technology of the present disclosure will be described in more detail below. When describing embodiments, reference is made to the accompanying drawings, which are provided solely to aid in the understanding of the described embodiment. It will be readily understood that the aspects of the present disclosure, as generally described herein, and illustrated in the figures, can be arranged, substituted, combined, and designed in a wide variety of different configurations, all of which are explicitly contemplated and make part of this disclosure.

The present invention relates to electrical energy management systems, and more particularly to modular systems for managing the distribution and control of electrical energy between multiple energy sources and loads interconnected via a direct current (DC) power distribution network. The invention is particularly suited for applications involving decentralized energy generation, storage, and consumption, such as residential or commercial microgrids, building-integrated energy systems, or vehicle-based energy networks.

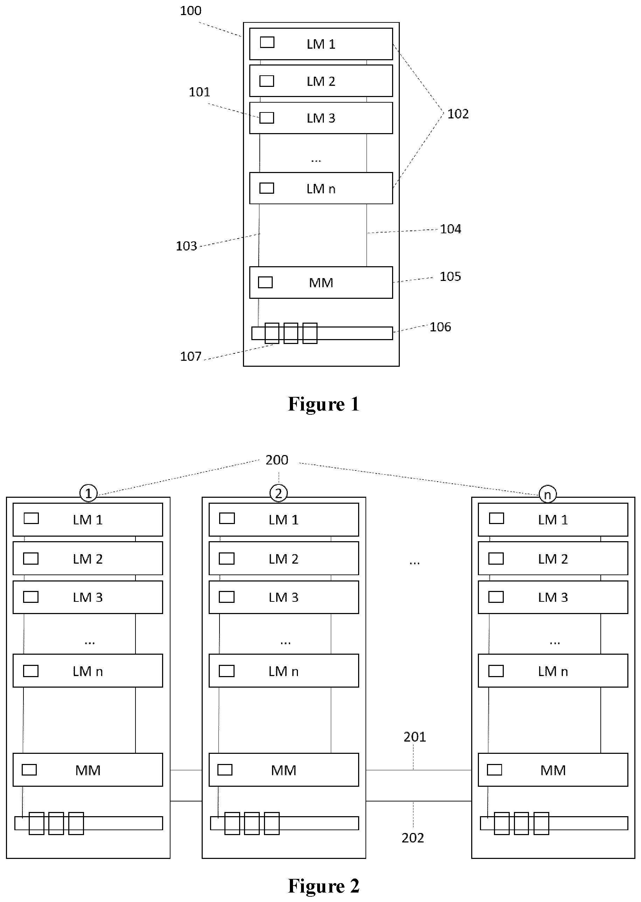

**Figure 1** is a block chart schematically illustrating a modular electrical energy management system 100 in accordance with certain embodiments of the present invention. The system 100 comprises a master module 105 ('MM') and a plurality of local modules 102 ('LM'), which are either comprising or connected to one or more energy source(s) and/or one or more load(s) as defined herein. The system may typically include at least one first local module comprising or connected to at least one source and at least one second local module comprising or connected to at least one load to establish a flow of electrical energy. However, it should be appreciated that there is, at least in principle, no limit to the maximum number of (active or inactive) local modules included in the system.

As used herein, an "energy load" refers to any apparatus, device, system, or component within or connected to the herein described electrical energy management system that consumes electrical energy. Examples may include, but are not limited to, residential, commercial, or industrial appliances, electric vehicles, heating and cooling systems, lighting systems, and any other electrical apparatus that requires energy to perform its intended function. A load may have varying energy consumption patterns and may also be capable of switching between active (consuming energy) and inactive (cut-off) states as controlled by the local module that it's connected to or its own control unit.

As used herein, an "energy source" refers to any apparatus, device, system, or component within or connected to the electrical energy management system that generates, produces, or supplies electrical energy. Examples may include, but are not limited to, renewable energy sources such as photovoltaic (PV) systems, wind turbines, and fuel cells, as well as conventional sources such as generators, grid connections, and combined heat and power (CHP) units. A source may deliver energy through the herein described electrical energy management system to the energy loads, store energy in batteries, or supply energy to the grid, and it may have the capability to switch between active (supplying energy) and inactive (cutoff) states as controlled by the local module that it's connected to or its own control unit.

As used herein, a "battery" refers to an energy storage device within the modular electrical energy management system that is configured for storing electrical energy and releasing it when requested. Accordingly, the battery can operate in two primary modes: charging mode, where it acts as an energy load by receiving and storing energy, and discharging mode, where it acts as an energy source by supplying stored energy to other components or systems. The battery may be a fixed battery, permanently connected to the system, or a removable battery, capable of connecting to and disconnecting from the system, such as a car battery. The battery can be composed of various technologies, such as lithium-ion, lead-acid, or solid-state cells, and is managed by the system to optimize energy storage and distribution, enhance efficiency, and ensure a stable supply of power to connected loads and modules.

Optionally, at least a portion of the local modules 102 may comprise a connection interface 101 configured to establish a connection between the local module and the connected energy source(s) and/or load(s). These connection interfaces may encompass various hardware and associated protocols facilitating physical and electrical connections. Advantageously, the connection interface securely connects the energy source(s) and/or load(s) to the system described herein, allowing for the transfer of electrical power between two or more local modules. In certain embodiments, the connection interface may consist of one or more connectors, terminals, wiring, and necessary communication ports or adapters to establish a reliable and safe connection.

The plurality of local modules 102 are supplied with power through a power supply network 103, comprising conductive pathways configured to carry electricity to the local modules ensuring operation. Advantageously, the conductive pathways are designed to appropriately handle currents and voltages to ensure safe and efficient energy distribution throughout the system. In certain embodiments, the pathways may consist of conductive materials, such as copper or aluminum, minimizing energy losses and maintaining system reliability. Advantageously, the power supply network 103 is designed to establish a connection between each local module 103 included in the system for improved efficiency. Alternatively, the distribution network 103 can be adapted to establish direct connection to each local modules 102 based on a predetermined connection path. Optionally, the power supply network 103 can extend to include the master module 105 or it can have its own power supply separate from the local modules.

The master module 105 is connected to the plurality of local modules 102 through a communication interface 104, comprising communicative pathways configured for data exchange between the master module 105 and the local modules 102, as well as possible data exchange between the local modules 102 themselves. These communicative pathways provide connection for transmitting control signals, performance profiles, and/or sensor measurements among the modules. In this way, the master module 105 can relay commands and receive feedback from each local module 102, facilitating real-time adjustments and optimization of the system's energy management strategy as described later. In certain embodiments, the communication interface may utilize wired or wireless communication protocols supporting fast data transfer to maintain system performance and responsiveness. Wired communication protocols may be preferred for improved reliability and speed.

Optionally, the system 100 may comprise a connection hub 106 configured to manage the above-described connections between the local modules 103, energy sources, and/or loads. The connection hub may include connective components 107 such as terminals, connectors, protective devices (e.g., fuses and residual current detectors), and switching devices. Advantageously, the connection hub is designed to facilitate integrating various local modules within the system, thereby ensuring ensures reliable electrical connections while enabling maintenance and system expansion.

**Figure 2** illustrates a modular electrical energy management network 200 comprising a plurality of modular energy management systems 100 in accordance with certain embodiments of the present invention. For instance, one modular energy management systems 100 may correspond to the system described in Figure 1 or any of its embodiments. Within the network 200, the systems 100 are interconnected via one or more power distribution networks 201 and one or more communication interfaces 202, as defined herein. Optionally, each system 100 may comprise a connection hub 106 enabling safe connectivity between the interconnected systems 100 through various hardware components such as terminals, connectors, protective devices (e.g., fuses and residual current detectors), and switching devices.

The modular electrical energy management network allows the creation of a network of high power, enabling the power supply of different energy sources towards different loads. An additional advantage is that each modular energy management system can be set up at different locations, such as closer to the available energy source(s) and/or load(s). This interconnected setup enhances system flexibility to address the specific needs and environments of the user.

In certain embodiments the electrical energy management systems 100 within the network 200 can be connected in series, whereby a management system 100 is limitedly connected to one or more neighbouring energy management systems 100, thereby forming a chain of systems 100 with a passing power distribution network 201 and/or communication interface 202. Alternatively, the energy management systems 100 within the network 200 can be independently connected to each management system 100 within the network 200, enabling parallel connectivity of the power distribution network 201 and/or communication interface 202. The skilled person can appreciate the advantages of each setup to form a unified network 200. Combinations of these embodiments are also possible.

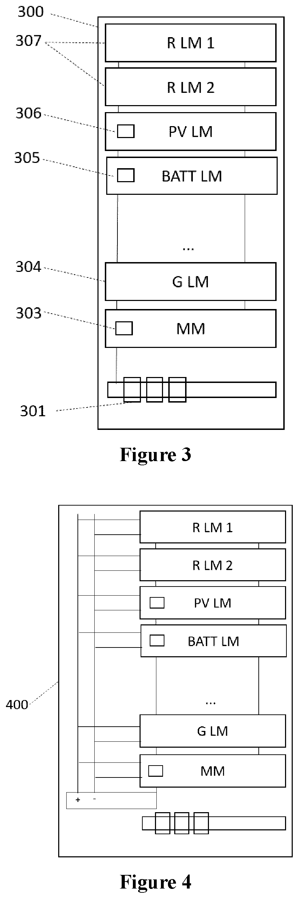

**Figure 3** shows an exemplary system 300 configured for residential application, comprising a plurality of local modules ('LM') that include one or more residential local modules 307 ('R LM'), a photovoltaic local module 306 connected a photovoltaic energy source ('PV LM'), a battery local module 305 connected to a battery (BATT LM), a grid local module 304 connecting the grid ('G LM'), and a master module 303 ('MM'). The "residential local module" refers to the module configured to interface with the energy needs of a household (including, for example, appliances, lighting, heating, cooling, and other residential energy demands). The "grid local module" refers to the module configured to interface with the electrical grid. Optionally, the system can comprise one or more grid connections 301 configured to interface with the grid. In This way, the master module (MM) and local modules (LM) are interconnected through the power distribution network and communication interface as described herein.

The connection between each modules and the corresponding energy source(s) and/or load(s) can be established either at the front or the back of each local module. For instance, in the present example, connections are illustrated at the front for the photovoltaic module 306, the battery module 305, and the master module 303, while the two residential modules 307 and the grid module 304 include connections at the back. This configuration provides improved flexibility for connectivity and maintenance of the system 300.

In any of the embodiments described above, different energy management strategies may be implemented to optimize the flow of energy between the local modules. The optimal energy management strategy is dependent on the system's global profile, which is influenced by various factors such as user requirements, the system's application, and the types of energy source(s) and/or load(s) connected. Each of these factors includes a set of parameters impacting the energy management strategy.

The global profile can be pre-constructed (for example, during the system set-up phase) or can be adapted based on the connected energy sources and/or loads. These profiles are advantageously configured in such a way that they can achieve the intended energy transfers for a specific operation mode. Depending on the operating conditions, one or more local modules can be active to deliver or receive energy to realize the intended operation of the system. Optionally, the system may include an external connection to receive one or more global profiles. For example, a local or internet connection can be established to provide the system with additional profiles.

Exemplary global profiles may include, but are not limited to, 'auto-consumption' (a profile to optimizes the usage of locally generated energy to minimize reliance on external power sources), 'battery charging' (a profile focusing on charging batteries to ensure they are available for use during periods of low energy generation), 'battery balancing' (a profile to ensures that batteries are charged and discharged evenly to prolong battery life and maintain system efficiency), 'islanding; (a profile allowing the system to operate independently of the grid, ensuring a stable power supply during grid outages), 'peak shaving' (a profile that reduces energy consumption during peak demand periods to lower energy costs and reduce strain on the grid), 'energy arbitrage' (a profile takes advantage of price differences in the energy market by buying low and selling high, optimizing economic benefits). By incorporating one or more profiles, the system can flexibly adapt to various scenarios, ensuring optimal performance and efficiency under different operating conditions.

The master module can be configured to determine the optimal energy management strategy between the local modules based on the global profile through a series of steps including receiving input, data acquisition, analysis, and algorithmic processing. The input may include at least technical information about the plurality of local modules, energy sources, and energy loads. Optionally, the master module can continuously or at predetermined times gather (real-time or intermittent) data from each local module, including power generation data from energy sources, power consumption data from loads, battery charge levels, grid status, and environmental conditions. This data can then be analysed to understand the current status of each local module within the overall system, assessing power generation capacity, evaluating energy demand, monitoring battery levels, and considering external factors like grid pricing and weather conditions.

Using predefined algorithms, the master module can process the acquired data to formulate a global profile defining the behaviour of each of the connected local modules. These algorithms may take into account various factors such as energy efficiency, cost optimization, load balancing, battery management, and peak shaving. Based on this processing, the master module can devise a set of local profiles that includes specific instructions for each local module regarding power supply, consumption, storage, and discharge. The master module may communicate these instructions to the local modules via the communication interface, enabling each module to adjust its operation accordingly. This dynamic process ensures efficient, cost-effective, and reliable energy management within the system, with continuous monitoring and adjustments made by the master module to maintain optimal performance despite changing conditions.

In certain embodiments, the energy management strategies of the global profile can include one or more energy-specific parameters, such as prioritizing the usage of available energy sources over external sources such as the grid, minimizing energy usage of specific loads, balancing the storage of battery cells, reducing peak grid loads to minimize costs, and optimizing energy costs based on dynamic tariffs. These parameters may be contained within specific device profiles, optionally set during the installation of the module, specifically when connecting an energy source(s) and/or load(s) to the system.

In certain embodiments, the energy management strategies of the global profile can include one or more user-specific parameters that influence the algorithm determining the energy management strategies. For example, specific user profiles may include energy-saving mode or profit optimization mode by considering dynamic energy tariff cost prices. In this way, the system can be configured to cooperate with external energy resources such as digital energy measuring or monitoring systems, specific components like heat pumps, or adapt to information provided by energy providers. While internal module strategies as set out above are typically set during initial installation, external interactions can be more dynamic.

In certain embodiments, the energy management strategies of the global profile can include one or more device-specific parameters, specifically related to the connected load(s) and/or source(s), such as technical or legal requirements of the devices and/or the grid. For instance, energy transfer to and from the grid typically must comply with specific technical requirements. For example, in the case of an overloaded grid (a grid with high voltage), the power of the grid module must be reduced. Advantageously, these requirements take priority over the energy-specific or user-specific parameters defined herein to ensure safe operation or technical malfunction.

In certain embodiments at least a portion of the local modules may provide information about energy flow to adapt the determination of energy management strategies without actively managing energy distribution. For example, when an electric car charger is connected to the system, the system might not need to manage the energy conversion directly within the charger. Instead, it might be sufficient to measure the energy being consumed by the charger. This measurement helps the system understand the overall energy usage and distribution. Additionally, communication interfaces can be included to interact with such modules to ensure controlled charging.

As detailed above, the master module can communicate the set of local profiles to each local module within the plurality of local modules, which are implemented as local operating conditions determining their behaviour within the system. The local modules have an adjustable mode of operation for adjusting flow of energy to the energy source(s) and/or load(s) that is adapted based on the instructions contained in the local profile and are used to manage the flow of energy between the set of local modules through a 'control signal' provided over a direct current distribution pathway interconnecting the master module and the local modules, which will be detailed below.

In certain embodiment the communication interface between the master module and the plurality of local modules is a low-speed communication interface configured to operate at data transfer rates sufficient for transmitting the performance profiles data, without requiring high-speed data transmission capabilities. The low-speed communication interface can operate at relatively low data transfer rates, ranging from a few bits per second (bps) to a few megabits (Mbps) per second, for example 10 Mbps or 5 Mbps or 1 Mbps, preferably up to a few kilobits per second (kbps), for example 125 kbps. Examples of low-speed communication interface may include, but are not limited to, CANbus, RS422, RS-232 and RS-485, I2C (Inter-Integrated Circuit), Modbus, Zigbee and the like. The herein described system primarily involves the transmission of performance profile data, which do not require high bandwidth. The use of low-speed communication interface can ensure reliable and energy efficient communication between the master module and the local modules at reduced costs and complexity. The skilled person understands that while the use of a low-speed communication can be advantageous for the reasons set out above, the invention can also be realised using high-speed communication interfaces.

In a further embodiment, the master module as described herein can be configured to determine or receive one or more global control conditions, including system-wide constraints and/or control objectives applicable across the plurality of local modules, and transmit the one or more global control conditions to the plurality of local modules. After receiving the global control conditions, each of the local modules can locally monitor the received global control conditions and modify the flow of electrical energy based on these conditions, thereby overriding its performance profile.

As used herein, "global control conditions" refer to requirements, limitations, or control signals originating outside the local module that influence or restrict the module's operation. These constraints may arise from legal regulations (e.g., anti-islanding requirements, feed-in limitations), grid compliance standards (e.g., national standards for power factor or voltage response), contractual obligations, external energy pricing signals (e.g., time-of-use tariffs or demand-response signals), or supervisory commands received from a central controller, building energy management system, or grid operator (e.g., emergency signals). Examples include mandated shutdown at abnormal grid frequencies or voltages, maximum feed-in thresholds, demand-response commands, or time-based operating schedules. In specific embodiments, the global control conditions may be locally determined or may be received via one or more communication interfaces or pre-programmed logic.

In this way, global operating constraints and priorities can be seamlessly integrated into decentralized module behaviour, enabling fast compliance with external requirements while preserving the system's overall autonomy and responsiveness.

In an alternative or complementary embodiment, one or more local modules of the plurality of local modules may be configured to define or receive one or more local operating conditions, including local constraints and/or device-specific operational preferences. After determining or receiving the local operating conditions, each of the local modules can locally monitor its local operating conditions and modify the flow of electrical energy based on these conditions, thereby overriding its performance profile.

As used herein, "local operating conditions" refer to status parameters or operational states directly associated with a local module or the energy source or load to which the local module is connected. These conditions are determined by the module's own sensors, internal control logic, or device-specific feedback systems. Examples of local operating conditions include, but are not limited to, battery temperature, battery state of charge, internal current or voltage limits, thermal conditions, fault states, or degradation indicators relevant to the connected energy source or load.

In some embodiments, the local operating condition may be defined based on the connected energy sources. Examples may include: battery state of charge (SoC) to prevent overcharging or deep discharge; temperature of the energy source (e.g., battery or inverter) to prevent thermal runaway or damage; internal fault detection or degraded cell performance to protect the system or isolate malfunctioning modules; or available generation (e.g., PV module output depending on sunlight) to reduce injected current when generation is low.

In some embodiments, the local operating condition may be defined based on the connected loads. Examples may include: charging current limits of a battery to reduce power drawn from the DC bus if exceeded; load shedding criteria (e.g., in demand response applications) to delay or disable load activation under high grid stress; overheating of powered devices (e.g., heaters, EV chargers) to reduce or suspend power supply for safety; or voltage sensitivity of connected equipment to modify power intake to stay within tolerable voltage ranges.

In this way, local safety, performance, and device-specific constraints are accounted for directly at the module level, enabling timely self-adjustment and reducing reliance on centralized coordination.

In a further embodiment, the plurality of local modules can be further configured to dynamically adjust their respective flows of electrical energy in response to any modification by one or more local modules, thereby maintaining a balanced flow of direct current across the power distribution network.

In some embodiments, each local module is configured to dynamically adjust its flow of electrical energy based on continuous monitoring of the voltage of the power distribution network, such that, in response to a modification or override by one or more local modules, the remaining local modules autonomously increase or decrease their respective power injection or absorption in accordance with their performance profiles, thereby maintaining a balanced flow of direct current across the power distribution network without requiring coordination from the master module.

In this way, a hybrid control behaviour can be established, enabling local modules to deviate from their assigned behaviour in response to local operating conditions, while other modules still following their performance profiles, react automatically to maintain balance on the DC power distribution network. This ensures safe and resilient system operation without requiring real-time oversight or intervention from the master module.

In some embodiments, a local module is configured to signal the master module upon activation of an override condition. This signalling may be triggered by detection of local operating conditions or global control conditions that require deviation from the performance profile, such as overtemperature, battery protection limits, or external grid compliance constraints. Preferably, the signalling includes a notification comprising an identifier of the local module, a timestamp, and an indication of the specific local operating condition and/or global control condition that triggered the modification or override.

In further embodiments, the notification can further comprise a restoration signal upon resolution of the local operating condition or global control condition, and the local module is configured to resume operation according to its performance profile upon transmission of the restoration signal.

In some embodiments, the master module is configured to receive override notifications from one or more local modules and, in response, dynamically adapt the system-wide energy management strategy. This may include generating updated global or local performance profiles, issuing modified control parameters, or initiating redistribution of energy flows across the system. Advantageously, the master module is configured to maintain a log of override events received from the local modules and perform periodic optimisation or diagnostics based on the aggregated override history. Alternatively or in combination, the local modules can be configured to temporarily store override events in a buffer and transmit them to the master module during scheduled communication windows or when a change in energy strategy is detected.

In some embodiments, the performance profiles transmitted by the master module are configured to account for and accommodate foreseeable local limitations. That is, the profiles are configured to support energy flow adaptation in the system even when one or more local modules undergo temporary restrictions due to internal or external conditions, thus extending beyond modifying standard operation. In some embodiments, the local modules are configured to autonomously respond to local performance changes by adjusting their energy flow according to their assigned performance profile. The profiles can structured in such a way that they allow for automatic compensation of changes caused by the override behaviour of other local module, advantageously without requiring immediate intervention from the master module.

In some embodiments, the master module retains supervisory authority to override, update, or reassign performance profiles based on evolving system conditions, feedback from local modules, or external events. This ensures a hybrid approach combining decentralized execution with centralized reconfiguration capability.

In some embodiments, the local modules are configured to restore operation in accordance with the performance profile once the local operating conditions and/or global control conditions return to acceptable levels, including recovery from fault conditions. Exemplary fault conditions may include such as overtemperature, overvoltage, undervoltage, or internal device protection events. This ensures that temporary overrides do not result in permanent deviation from the predefined energy management strategy.

In one exemplary embodiment, the system comprises a local module configured as a grid inverter. The grid inverter is adapted to operate in compliance with applicable standards and legal requirements. The grid inverter can implement override actions that are triggered by the detection of one or more global control conditions and take precedence over the normal operation defined by the inverter's performance profile. In particular, the grid inverter can be configured to locally monitor the grid voltage and frequency and to override its performance profile based on the following conditions:
- disconnect from the grid when the grid voltage exceeds an upper limit or drops below a lower limit;
- disconnect from the grid when the mains frequency is outside of an acceptable range;
- inject power into the grid in response to a drop in mains frequency, thereby contributing to frequency support;
- absorb power from the grid in response to a rise in mains frequency; and/or
- disconnect entirely from the grid upon detection of a grid failure or loss of mains voltage.

In another exemplary embodiment, the system comprises a local module configured as a battery charger. The battery charger is configured to override its performance profile in response to one or more locally monitored battery conditions in order to protect the battery and ensure safe operation. In each case, the battery charger can temporarily suspend or modify its power exchange with the power distribution network based on local operating conditions, overriding the assigned performance profile. In particular, the battery charger can be configured to override its performance profile based on the following conditions:
- follow a predefined charging curve, wherein the charging current is dynamically adjusted as a function of the battery voltage and/or state of charge;
- discontinue charging once the battery reaches full charge in order to prevent overcharging; and/or
- reduce or suspend the charging or discharging current in response to high or low battery or cell temperatures to prevent thermal damage or stress.

**Figure 4** illustrates the power distribution network implemented in the modular energy management system 100 in accordance with certain embodiments of the present invention. The power distribution network in this embodiment comprises electrically conductive pathways through which direct current flow can between the plurality of local modules for transfer of electrical energy between the various connected sources and loads. The components of this system have previously described with reference to Figure 3.

As used herein, a "power distribution network" refers to the physical connection specifically designed to carry direct current (DC) between the different local modules within the system. This network may include cables, conductors, and associated electronic components such as capacitors, inductors, and semiconductors. The power distribution network ensures the efficient and reliable transfer of DC electrical power, facilitating the control and management of energy flows within the system. Advantageously, the electrically conductive pathways are designed to appropriately handle high currents and voltages to ensure safe and efficient energy distribution throughout the system. In certain embodiments, the pathways may consist of heavy-duty conductive materials, such as copper or aluminum, minimizing energy losses and maintaining system reliability. Optionally, the power distribution network can extend to include the master module.

In certain embodiment at least a portion the local modules of the system can be configured for energy conversion by including an internal power converter. These power converters can be of various types, including DCDC, ACDC, or DCAC, depending on the specific requirements of the module. For example, a photovoltaic module can connect to a string of photovoltaic panels using a DCDC converter, while a battery module might connect to one or more batteries using a similar converter type. An ACDC converter is typically used in grid modules to interface with the AC grid, while a DCAC converter is used in residential modules to deliver power to an island grid setup. Alternatively the power converters can be included in the connected energy source(s) and/or load(s) achieving the same result. This approach allows for the integration of different types of energy sources and loads, ensuring that each module can effectively manage its specific energy conversion and adapt to various energy sources and consumption patterns.

As detailed above, each local module receives a corresponding local profiles from the master module that includes one or more operating parameters defining its operation responsive to the flow of direct current across the power distribution network. Specifically, the local modules are configured to continuously monitor the flow of direct current across the power distribution network and adjust the flow of electrical energy on the power distribution network in accordance with the operating parameters included in the corresponding performance profile.

In exemplary embodiments, the operating parameters may include various criteria, including but not limited to 'maximum positive current' (the highest allowable positive current that can be supplied by the local module), 'maximum negative current' (the highest allowable negative current (reverse current) that can be received by the local module), 'maximum voltage' (the upper voltage limit that the local module can handle), 'minimum voltage' (the lower voltage limit that the local module can handle to maintain stable operation), 'maximum power' (the highest power output that the local module can provide), 'minimum power' (the lowest power output that the local module must provide to maintain stable operation). These criteria can be based on thresholds, activating specific operational modes whenever one or more thresholds are reached, or they can be dynamic, adjusting in real-time depending on the specific operating conditions of the connected load and/or energy source(s).

In certain embodiments, the energy flow within each local module can be regulated by the direct current voltage on the power distribution network. This approach permits each module to independently adjust its electrical energy flows, optimizing their operations without needing continuous real-time input from the master module. The master module's role is thus confined to configuring the energy conversion modules based on the overarching energy conversion strategy.

By decentralizing the control and leveraging the direct current distribution pathway voltage, the system ensures that each module can promptly and effectively respond to changes in energy flow demands. This method enhances the system's overall responsiveness and reliability, as the modules can autonomously adjust their operations to maintain optimal performance. This advantageous effect is realised through a combination of the local module's adjustable mode of operation to adjust the electrical energy of the connected energy source(s) and/or load(s) and the master module's instruction determined from the system configuration data as defined herein.

In further embodiments the local modules may comprise a means for measuring the voltage of the direct current flowing across the power distribution network. Embodiments of voltage measurement means may include, but are not limited to, a voltage divider circuit, Analog-to-Digital Converter (ADC), an isolated voltage sensor, a voltage sensor module, and/or a differential measurement device. The skilled person can appreciate the advantages of each setup to measure the direct current voltage. Combinations of these embodiments are also possible.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps. The singular forms "a", "an", and "the" include both singular and plural referents unless the context clearly dictates otherwise.

As used herein, relative terms, such as "left," "right," "front," "back," "top," "bottom," "over," "under," etc., are used for descriptive purposes and not necessarily for describing permanent relative positions. It is to be understood that such terms are interchangeable under appropriate circumstances and that the embodiment as described herein are capable of operation in other orientations than those illustrated or described herein unless the context clearly dictates otherwise.

Objects described herein as being "adjacent" to each other reflect a functional relationship between the described objects, that is, the term indicates the described objects must be adjacent in a way to perform a designated function which may be a direct (*i.e.* physical) or indirect (*i.e.* close to or near) contact, as appropriate for the context in which the phrase is used.

Objects described herein as being "connected" or "coupled" reflect a functional relationship between the described objects, that is, the terms indicate the described objects must be connected in a way to perform a designated function which may be a direct or indirect connection in an electrical or nonelectrical (*i*.*e*. physical) manner, as appropriate for the context in which the term is used.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance (e.g. increased or decreased results, depending on the context). It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

In addition, embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (e.g., instructions stored on non-transitory computer-readable medium) executable by one or more processing units, such as a microprocessor and/or application specific integrated circuits. As such, it should be noted that a plurality of hardware and software-based devices, as well as a plurality of different structural components may be utilized to implement the technology of the present disclosure. For example, "servers" and "computing devices" described in the specification can include one or more processing units, one or more computer-readable medium modules, one or more input/output interfaces, and various connections connecting the components.

### EXAMPLES

The following examples illustrate various implementations of the technology according to aspects of the present invention. The inclusion of these examples is intended to aid the reader in understanding the technological concepts more easily, but they are not intended to identify the most important or essential features, nor are they meant to limit the scope of the present disclosure. It is understood that the embodiments presented in these examples form preferred embodiments of the invention described herein.

### Example 1: 'Auto consumption' performance profile

In a first example the system is configured for 'auto consumption' (AUTO) strategy as its global profile. In this configuration, the system aims to prioritize the use of locally stored energy, thereby minimizing reliance on grid power. Specifically, the user, such as a residential household, will primarily utilize energy from the battery whenever possible, avoiding the use of grid power. In cases of excess photovoltaic (PV) energy production exceeding household consumption, the surplus energy is preferably stored in the battery. If the battery is fully charged, any remaining power is injected into the grid.

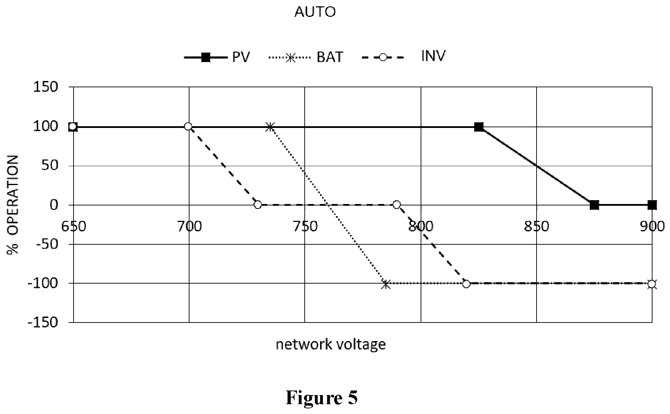

**Figure 5** shows the operational performance of three different modules in an exemplary energy management system as described herein: photovoltaic (PV), battery (BATT), and inverter (INV). The performance is expressed as a percentage operation (% OPERATION) on the y-axis, ranging from -100% to 100%, while the x-axis represents the network voltage, ranging from 650V to 900V.

The "% operation" refers to the operational performance of the corresponding module expressed as a percentage, encompassing both its maximum positive power level and minimum power level. The maximum positive power level denotes the highest achievable positive power output by the module, while the minimum power level represents the highest achievable power input.

As can be seen, the PV module represented by the continuous line operates at full capacity (100%) until the network link voltage reaches 850V. This indicates that the system prioritizes the use of solar energy as long as the voltage levels are within a safe range. When the network voltage exceeds 850V, the PV module's output is gradually reduced to prevent overvoltage conditions, eventually shutting down at 900V.

The BATT module, represented by the dotted line, charges at full capacity (100%) until the network voltage reaches 700V. This means that the battery is prioritized for charging when there is excess energy. As the network voltage increases beyond 700V, the battery charging rate decreases. At 800V, the battery stops charging and starts discharging (-100%) as the voltage approaches 900V, indicating that the system uses the battery to stabilize the network voltage.

The INVERTER Module, represented by the dashed line, operates at full capacity (100%) when the network voltage is between 650V and 700V, indicating it is supplying power to the grid or loads. The inverter output is reduced to 0% as the voltage increases to 750V, indicating it stops supplying power. As the network voltage increases from 800V to 900V, the inverter operates in reverse (-100%), possibly injecting excess energy back into the grid to prevent overvoltage.

This example demonstrates how the system is capable of ensuring efficient energy usage by dynamically adjusting the operation of the PV, battery, and inverter modules based on the network voltage, thereby optimizing the energy flow and maintaining system stability.

### Example 2: 'Battery charging' performance profile

In a second example the system is configured for 'battery charging' (BATT (+)) strategy as its global profile. In this configuration, the system will prioritize the charging of batteries, utilizing remaining energy to inject into the grid when advantageous tariffs are available. In this way, the system can optimize energy storage and grid interaction based on economic conditions.

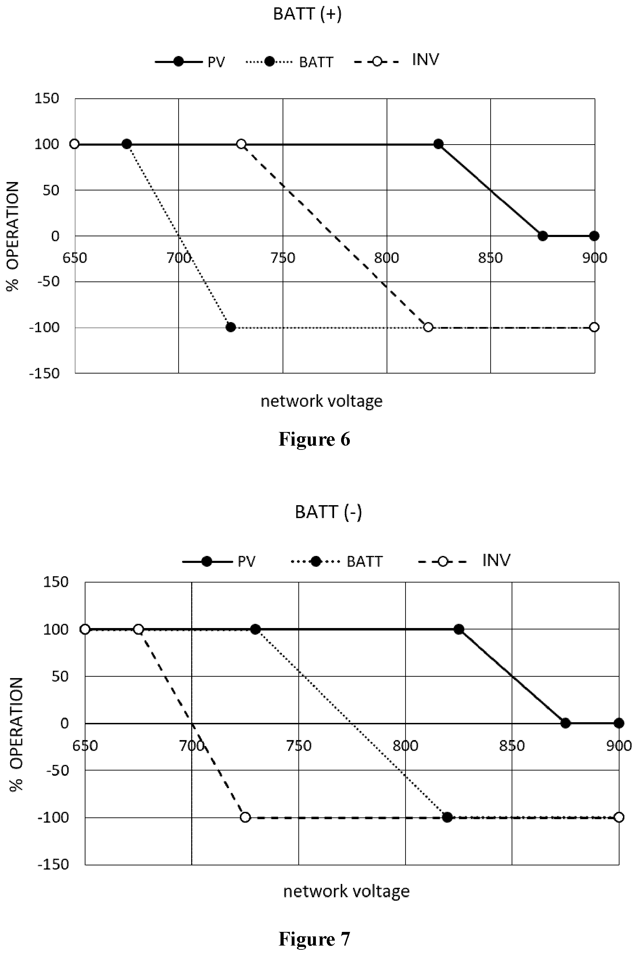

**Figure 6** shows the operational performance of three different modules in an exemplary energy management system as described herein: photovoltaic (PV), battery (BATT), and inverter (INV). The performance is expressed as a percentage operation (% OPERATION) on the y-axis, ranging from -100% to 100%, while the x-axis represents the network voltage, ranging from 650V to 900V.

As can be seen, the PV module represented by the continuous line operates at full capacity operates consistently at 100% as long as the network voltage is between 650 and 850 volts. Once the voltage exceeds 850 volts, the PV module's operation starts to decrease gradually, and it drops to 0% at 900 volts. This indicates that the PV module reduces its power output when the voltage is too high to avoid overloading the system.

The BATT module, represented by the dotted line, starts at 100% operation at a network voltage of 700 volts. As the voltage increases, its operation decreases. At 750 volts, the battery module's operation is reduced to 50%. The operation further decreases to 0% at 800 volts, indicating no charging or discharging. The operation turns negative, reaching -100% at 900 volts, which indicates the battery is discharging energy into the system rather than charging.

The INVERTER Module, represented by the dashed line, starts at -100% operation at 650 volts, indicating it is injecting energy into the grid. The operation remains at -100% up to 700 volts, then the inverter's operation shifts to 0% at 750 volts. The inverter remains at 0% operation from 750 volts to 900 volts, indicating no power transfer during this voltage range.

This example demonstrates how the system is capable of prioritize charging the battery when the network voltage is optimal, ensuring efficient energy storage and utilization. When the voltage exceeds certain thresholds, the system adjusts to prevent overcharging and efficiently manages the energy flow between the PV, battery, and grid.

### Example 3: 'Battery discharging' performance profile

In a third example the system is configured for 'battery discharging' strategy (BATT (-)) as its global profile. In this configuration, the system will prioritize the discharging of batteries, particularly when there is a need to release stored energy back into the grid or to balance the system's voltage levels. In this way, the system can dynamically adjust the operation of the PV, battery, and inverter modules to optimize battery discharging while ensuring efficient energy management and maintaining system stability.

**Figure 7** shows the operational performance of three different modules in an exemplary energy management system as described herein: photovoltaic (PV), battery (BATT), and inverter (INV). The performance is expressed as a percentage operation (% OPERATION) on the y-axis, ranging from -100% to 100%, while the x-axis represents the network voltage, ranging from 650V to 900V.

As can be seen, the PV module represented by the continuous line operates at operates at full capacity (100%) until the network voltage reaches 850 volts. Once the network voltage exceeds 850 volts, the PV module's operation decreases to 0% at 900 volts. This indicates that the PV module reduces its power output when the voltage is too high to prevent overcharging the battery or overloading the system.

The BATT module, represented by the dotted line, starts at 100% operation at a DC link voltage of 650 volts. As the voltage increases, the battery's operation gradually decreases to 0% at 800 volts. When the voltage continues to rise beyond 800 volts, the battery module's operation becomes negative, reaching - 100% at 850 volts. This indicates that the battery is discharging energy into the system rather than charging.

The INVERTER Module, represented by the dashed line, starts at 100% operation at 650 volts. As the voltage increases, the inverter's operation decreases to 0% at 700 volts. As the voltage continues to rise, the inverter's operation becomes negative, reaching -100% at 750 volts. This signifies that the inverter is supplying energy back to the grid to prevent further increases in the DC link voltage.

This example demonstrates how the system is capable of prioritize discharging the battery when required, ensuring optimal energy utilization and maintaining system stability. As the DC link voltage increases, the system dynamically adjusts the power output of the PV, battery, and inverter modules to prevent overvoltage conditions and efficiently manage the energy flow. This strategy highlights the system's capability to manage energy flow in response to varying voltage levels, optimizing battery discharging while maintaining overall system efficiency.

### Example 4: global control conditions

In a fourth example, a modular electrical energy management system comprises a local grid inverter module, which is configured to inject electrical energy from the DC power distribution network into an external utility grid. The system further includes one or more additional local modules, such as a PV module and a battery storage module, each of which is configured to supply energy to or absorb energy from the DC power distribution network.

Each local module operates based on a performance profile received from the master module. These performance profiles may include one or more operating parameters defining how each module adjusts its power output or consumption in response to the measured voltage on the DC power distribution network - as previously described in Examples 1-3.

Additionally, the master module transmits one or more global control conditions to each of the local modules. These conditions may include regulatory constraints, such as maximum permissible grid voltage thresholds, applicable system-wide.

In this example, the local grid inverter module is configured to continuously monitor its local operating conditions and the global control conditions received from the master module. When the grid voltage exceeds a predefined regulatory limit-a global control condition-the grid inverter module overrides its performance profile and immediately reduces or stops its power injection into the utility grid. This override is performed autonomously by the local module without requiring intervention from the master module.

As a result of the grid inverter's disengagement, the energy that was previously being exported to the grid accumulates on the DC power distribution network, leading to a sudden increase in the DC link voltage. The other local modules, such as the PV module and battery storage module, respond to this change by monitoring the flow of direct current and continuing to operate according to their respective performance profiles. For example, the PV module reduces its power output to the DC link, and the battery charger limits or halts its charging current. These adjustments help stabilize the DC voltage on the power distribution network.

This example illustrates the hybrid control behaviour of the system. A local module (the grid inverter) deviates from its performance profile in response to a global control condition, while the remaining modules continue to operate according to their assigned profiles. This allows the system to maintain dynamic balance of the DC power distribution network without centralized intervention.

### Example 5: local operating conditions

In a fifth example, a modular electrical energy management system comprises a battery charger module configured to charge a battery storage unit using energy received from the DC power distribution network. The system further includes one or more additional local modules, such as a PV generation module and a grid inverter module.

Each local module operates based on a performance profile received from the master module. These performance profiles may include one or more operating parameters defining how each module adjusts its power output or consumption in response to the measured voltage on the DC power distribution network - as previously described in Examples 1-3.

Additionally, the local modules define one or more local operating conditions based on the characteristics, constraints, or safety requirements of their connected energy sources or loads such as the battery unit. These conditions may include, for example, battery state-of-charge, temperature thresholds, device fault states, or other parameters relevant to safe and efficient operation of the individual device. The local operating conditions are continuously monitored by the local module and may trigger an override of the behaviour defined by the performance profile to ensure device-level protection or compliance.

In this example, the battery charger module is additionally configured to continuously monitor one or more local operating conditions-specifically, battery state-of-charge, voltage, and temperature. When the battery nears full charge or if the temperature exceeds a safe operating threshold, the battery charger overrides its assigned performance profile to prevent battery degradation or thermal stress. For instance, it may reduce or completely stop charging current, irrespective of the DC link voltage or the behaviour defined in its performance profile.

This override is triggered solely based on internal safety considerations (i.e., local operating conditions), without the need for commands or updates from the master module. While the battery charger is in override, it no longer contributes to regulating the DC link voltage.

As a result, the energy that would have been absorbed by the battery remains on the DC link, causing a temporary rise in voltage. The other local modules detect this voltage change and autonomously adjust their behaviour in accordance with their own performance profiles. For example, the PV module reduces its output to the DC link, while the grid inverter module increases its power export to the grid, provided the grid conditions permit.

This example illustrates the system's hybrid control behaviour: local modules can deviate from their assigned behaviour in response to local operating conditions, while other modules-still following their profiles-react automatically to maintain balance on the DC power distribution network. This ensures safe and resilient system operation without requiring real-time oversight or intervention from the master module.

### Example 6: dynamic performance profiles strategy updates

In a sixth example, an electrical energy management system includes a master module and several local modules, such as a grid inverter, a PV module, and a battery charger module. Each local module is configured to operate based on a performance profile provided by the master module, which determines the overall energy management strategy for the system.

In this example, the master module receives updated external pricing information indicating that electricity prices on the utility grid have dropped significantly during a specific time window. In response, the master module can update the global energy strategy to make use of the low-cost energy. It determines new performance profiles for each of the local modules: the battery charger profile is updated to allow charging from the grid, and the grid inverter profile is adjusted to reduce or suspend grid export when tariffs are zero or negative. These updated performance profiles are transmitted to the respective local modules.

Upon receiving their new profiles, the local modules begin operating in accordance with the updated strategy. The battery charger starts to draw power from the grid to charge the battery during the low-price period, and the PV module reduces its export to the grid as instructed by its new profile.

Meanwhile, each module continues to monitor its own local operating conditions. If the battery approaches a full charge or overheats, the battery charger overrides the active profile and suspends charging to protect the battery. Similarly, if the grid voltage exceeds permitted thresholds, the grid inverter interrupts its operation according to local regulatory compliance logic.

The other modules, operating according to their performance profiles, automatically compensate for these changes. For example, if the battery stops charging, the PV module will further reduce output, or the grid inverter (if allowed) may absorb the surplus by exporting more to the grid.

This example illustrates how the system can adapt its performance profiles in response to external economic signals while preserving the local autonomy of each module. The hybrid control strategy ensures both cost-effective operation and system resilience, without requiring immediate coordination from the master once the updated profiles are distributed.

## Claims

1. A modular electrical energy management system (100) comprising:
- a master module (105) communicatively connected to a plurality of local modules (102);
- wherein at least one of the plurality of local modules (102) comprises and/or is connected to one or more electrical energy sources;
- wherein at least one of the plurality of local modules (102) comprises and/or is connected to one or more loads;
- a power distribution network (401) configured for the transfer of electrical energy as direct current between the plurality of local modules (102);
- wherein each local module of the plurality of local modules (102) is configured to locally adjust the flow of electrical energy to or from the power distribution network (401);
- wherein the master module (105) is configured to:
- receive system configuration data including information about the plurality of local modules, energy sources, and energy loads;
- determine, from the system configuration data, a global profile defining an energy management strategy and one or more global control conditions including system-wide constraints and/or control objectives applicable across the plurality of local modules;
- determine, from the global profile, a set of performance profiles specific to a respective local module, wherein each performance profile includes one or more operating parameters defining how the local module is to operate in response to the flow of direct current across the power distribution network; and,
- transmit the set of performance profiles and the one or more global control conditions to the corresponding local modules;
- wherein each local module of the plurality of local modules (102) is configured to:
- receive, from the master module, the corresponding performance profile of the set of performance profiles and the global control conditions;
- define, based on its comprised and/or connected electrical energy sources or loads, one or more local operating conditions including local constraints and/or device-specific operational preferences;
- continuously monitor the flow of direct current across the power distribution network, and control the flow of electrical energy to or from the power distribution network in accordance with the operating parameters defined in its performance profile; and,
- continuously monitor its local operating conditions and the received global control conditions, and modify the flow of electrical energy based on the local operating conditions and/or global control conditions, thereby overriding the performance profile;
- wherein the plurality of local modules is further configured to dynamically adjust their respective flows of electrical energy in response to any modification by one or more local modules, thereby maintaining a balanced flow of direct current across the power distribution network (401).

2. The system according to claim 1, wherein each local module of the plurality of local modules is configured to measure a voltage of the direct current flowing across the power distribution network and adjust the flow of electrical energy to or from the power distribution network responsive to the measured voltage.

3. The system according to claim 2, wherein each local module of the plurality of local modules comprises a voltage sensor configured for measuring of voltage of the direct current flowing across the power distribution; preferably wherein the voltage sensor includes a voltage divider circuit, Analog-to-Digital Converter, an isolated voltage sensor, a voltage sensor module, and/or a differential measurement device.

4. The system according to any one of the preceding claims, wherein each local module is configured to dynamically adjust its flow of electrical energy based on continuous monitoring of the voltage of the power distribution network, such that, in response to a modification or override by one or more local modules, the remaining local modules adjust their respective flows of electrical energy without receiving further performance profiles from the master module.

5. The system according to any one of the preceding claims, wherein the one or more global control conditions comprise at least one of: a voltage limit on the utility grid, a frequency deviation on the utility grid, a demand-response signal, a feed-in limitation imposed by a grid operator, and/or a time-of-use tariff.

6. The system according to any one of the preceding claims, wherein the one or more local operating conditions comprise at least one of: a state of charge of a connected battery, a temperature of a connected energy source or load, a fault condition detected by the local module, and/or a current or voltage limit of a connected device.

7. The system according to any one of the preceding claims, wherein each local module is further configured to transmit a notification to the master module upon initiating a modification or override of the performance profile based on the local operating conditions and/or global control conditions; and wherein the master module is further configured to, in response to receiving the notification, update one or more performance profiles to adapt to the modified behaviour of the local module that are transmitted to at least one other local module to rebalance the flow of electrical energy across the power distribution network.

8. The system according to any one of the preceding claims, wherein each local module is configured to resume operation in accordance with its performance profile after the local operating conditions and/or global control conditions return to acceptable levels.

9. The system according to any one of the preceding claims, wherein at least one local module comprises a connection interface (101) configured for establishing an adjustable electrical connection with the source and/or the load.

10. The system according to any one of the preceding claims, wherein at least one local module comprises a power converter unit configured for converting the power input of the connected energy loads and/or the power output of the connected energy sources to direct current into the power distribution network; preferably wherein the power converter unit includes a DCDC, ACDC, and/or DCAC inverter.

11. The system according to any one of the preceding claims, further comprising a communication interface (104) comprising communicative pathways configured for data exchange between the master module and the plurality of local modules, wherein the communication interface is a low-speed communication interface configured to operate at data transfer rates sufficient for transmitting the performance profiles data, without requiring high-speed data transmission capabilities; preferably wherein the low-speed communication interface operates at data transfer rates ranging up to 10 megabits per second (Mbps), preferably up to 125 kilobits per second (kbps).

12. The system according to any one of the preceding claims, wherein the electrical energy source comprises one or more photovoltaic systems, wind turbines, fuel cells, generators, grid connections, and/or combined heat and power units; and/or wherein the load comprises one or more residential appliances, commercial appliances, industrial appliances, electric vehicles, heating and cooling systems, and/or lighting systems.

13. A modular energy management network (200) comprising a plurality of electrically connected modular energy management systems (100) according to any one of claims 1 to 12.

14. A method for modularly managing electrical energy, the method comprising the steps of:
- providing a modular electrical energy management system (100) comprising a master module (105) communicatively connected to a plurality of local modules (102), wherein at least one of the plurality of local modules (102) comprises and/or is connected to one or more electrical energy sources, wherein at least one of the plurality of local modules (102) comprises and/or is connected to one or more loads, and a power distribution network (401) electrically connecting the plurality of local modules (102) for the transfer of electrical energy as direct current;
- receiving, by the master module (105), system configuration data including information about the plurality of local modules, energy sources, and energy loads;
- determining, by the master module (105), from the system configuration data: a global profile defining an energy management strategy, and one or more global control conditions defining system-wide constraints and/or control objectives applicable across the plurality of local modules (102);
- determining, by the master module, from the global profile, a set of performance profiles specific to a respective local module, wherein each performance profile includes one or more operating parameters defining how the corresponding local module is to operate in response to the flow of direct current across the power distribution network;
- transmitting, by the master module, the set of performance profiles and the one or more global control conditions to the corresponding local modules;
- receiving, by each local module, the corresponding performance profile of the set of performance profiles from the master module;
- defining, by each local module of the plurality of modules (102), based on its comprised and/or connected electrical energy sources or loads, one or more local operating conditions including local constraints and/or device-specific operational preferences;
- continuously monitoring, by each local module, the flow of direct current across the power distribution network, and, controlling the flow of electrical energy to or from the power distribution network in accordance with the operating parameters included in the corresponding performance profile;
- continuously monitoring, by each local module, its local operating conditions and the received global control conditions, and modifying the flow of electrical energy based on the local operating conditions and/or global control conditions, thereby overriding the performance profile;
- dynamically adjusting, by the plurality of local modules, their respective flows of electrical energy in response to any modification by one or more local modules, thereby maintaining a balanced flow of direct current across the power distribution network (401).

15. The method according to claim 14, comprising the step of continuously monitoring, by each local module, a voltage of the direct current flowing across the power distribution network, and adjust the flow of electrical energy to or from the power distribution network responsive to the measured voltage.
